## Europäisches Patentamt
## European Patent Office
## Office européen des brevets

(19)

(11) Numéro de publication: **0 059 230**
**B1**

(12) **FASCICULE DE BREVET EUROPEEN**

(45) Date de publication du fascicule du brevet:
**23.04.86**

(21) Numéro de dépôt: **81101472.9**

(22) Date de dépôt: **02.03.81**

(51) Int. Cl.⁴: **F 16 C 27/06,** F 16 C 33/20,
F 16 C 33/10, F 16 C 33/74

(54) **Palier élastique autolubrifiant.**

(43) Date de publication de la demande:
**08.09.82 Bulletin 82/36**

(45) Mention de la délivrance du brevet:
**23.04.86 Bulletin 86/17**

(84) Etats contractants désignés:
**DE GB IT SE**

(56) Documents cités:
**FR - A - 1 312 969
FR - A - 1 485 799
FR - A - 2 133 320
FR - A - 2 442 371
GB - A - 805 539
GB - A - 1 517 160
US - A - 3 239 286
US - A - 3 601 459**

(73) Titulaire: **CHROMEX S.A. Société dite:, F-91510 - Lardy
(FR)**

(72) Inventeur: **de Pretto, Alain, 32 rue des Archers,
F-91310 Montléry (FR)**
Inventeur: **Laraize, Henri 59, Résidence "Les
Cendrennes", Saint-Germain-les-Arpajon,
F-91290 Arpajon (FR)**

(74) Mandataire: **Casalonga, Axel et al, BUREAU D.A.
CASALONGA OFFICE JOSSE & PETIT
Baaderstrasse 12-14, D-8000 München 5 (DE)**

ACTORUM AG

## Description

La présente invention se rapporte à une réalisation de palier élastique autolubrifiant destiné à être interposé entre deux éléments à rotation relative et principalement conçu pour répondre à l'exigence d'obtention d'un faible couple de friction sans exiger cependant des servitudes d'usinage ou de cotes de fabrication ou montage astreignantes quant auxdits éléments.

On connaît déjà, d'après le brevet FR-A-2 133 320 au nom de la demanderesse, un palier élastique autolubrifiant destiné à être interposé entre deux éléments à rotation relative, comprenant un coussinet en élastomère ayant une surface interne à faible coefficient de friction, destinée à coopérer avec l'élément interne, et une surface externe s'introduisant dans un logement de montage. Cependant le jeu de fonctionnement nécessaire au départ s'accentue avec l'usure et limite la durée d'utilisation.

On sait par ailleurs, d'après le brevet US-A-3 601 459, réaliser des paliers moulés en matière déformable telle que du nylon, en donnant à la surface intérieure une forme comportant des ondulations axiales pour limiter la portée de glissement à quelques génératrices situées entre des saillies externes de manière que la paroi travaille en flexion, en étant renforcée en outre par une bande de ressort ondulée insérée au moulage dans cette paroi. Cette solution permet un rattrapage automatique de l'usure, mais au prix d'un moulage complexe, non circulaire et avec insert métallique.

Le but de l'invention est d'éliminer les inconvénients précédents en réalisant un palier élastique et de bonnes propriétés autolubrifiantes comme le premier palier sus-visé, avec en outre un rattrapage automatique d'usure comme le deuxième palier sus-visé, mais d'une fabrication plus facile.

Essentiellement, à cet effet, le palier élastique autolubrifiant selon l'invention, comprenant un coussinet en élastomère ayant une surface interne à faible coefficient de friction destinée à coopérer avec l'élément interne à rotation relative, est caractérisé en ce qu'il est prévu, sur ladite surface externe du coussinet ou dans ledit logement, au moins trois portées saillantes angulairement réparties et destinées à conférer une déformation à la surface interne de friction du coussinet, telle que son contact avec l'élément interne précité se trouve assuré suivant des zones axiales réparties de précharge du coussinet, à effet de centrage et de filtrage des vibrations entre les deux éléments précités.

De préférence, ledit coussinet est placé dans un boîtier de montage emmanchable dans l'élément externe à rotation relative et constituant ledit logement. Ce boîtier peut avantageusement être entouré d'un manchon en élastomère à emmanchement autobloquant par adhérence dans ledit élément externe, ce boîtier soustrayant le coussinet élastique aux contraintes d'emmanchement du manchon précité.

Le boîtier et le manchon peuvent aussi remplir avantageusement par eux-mêmes d'autres fonctions utiles avec un tel palier, telles que des fonctions de butée radiale, axiale, de passage de fluide ou d'étanchéité, ainsi qu'on le verra plus loin.

Deux formes de réalisation d'un palier élastique autolubrifiant selon l'invention sont d'ailleurs ci-après décrites à titre d'exemple et en référence au dessin annexé, dans lequel:

— la figure 1 est une vue en coupe axiale, suivant I—I de la figure 2, d'une réalisation de palier élastique autolubrifiant selon l'invention;

— la figure 2 est une vue en coupe transversale du palier de la figure 1, suivant II—II;

— la figure 3 est une vue en coupe transversale du coussinet élastique à l'état libre;

— la figure 4 est une vue en coupe axiale d'une autre forme de réalisation d'un palier élastique autolubrifiant selon l'invention.

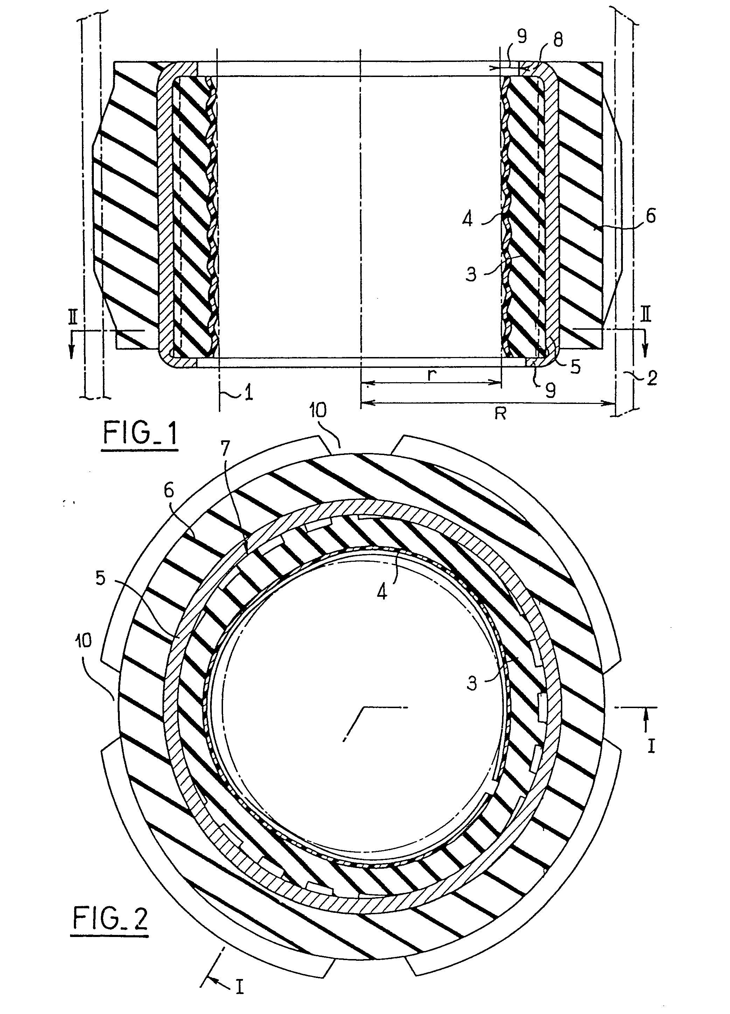

Le palier représenté à la figure 1 à l'état libre est destiné à être interposé entre un arbre 1 de rayon indiqué en r et un tube carter 2 de rayon interne indiqué en R.

Ce palier comprend un coussinet élastique constitué d'un manchon en élastomère 3 pourvu d'une pellicule autolubrifiante 4 à faible coefficient de friction, de préférence en résine fluorocarbonée, adhérisée à l'intérieur du manchon, l'ensemble étant moulé avec un nervurage circulaire interne destiné à réduire relativement sa surface de friction avec l'arbre 1, indépendamment des dispositions plus loin décrites à cet effet.

Ce coussinet 3—4 est serti dans un boîtier de montage 5 emmanchable dans le tube carter 2 pour immobilisation et, de préférence, ici pourvu à cet effet d'un manchon 6 en élastomère, à emmanchement autobloquant par adhérence résultant de sa compression dans le tube carter.

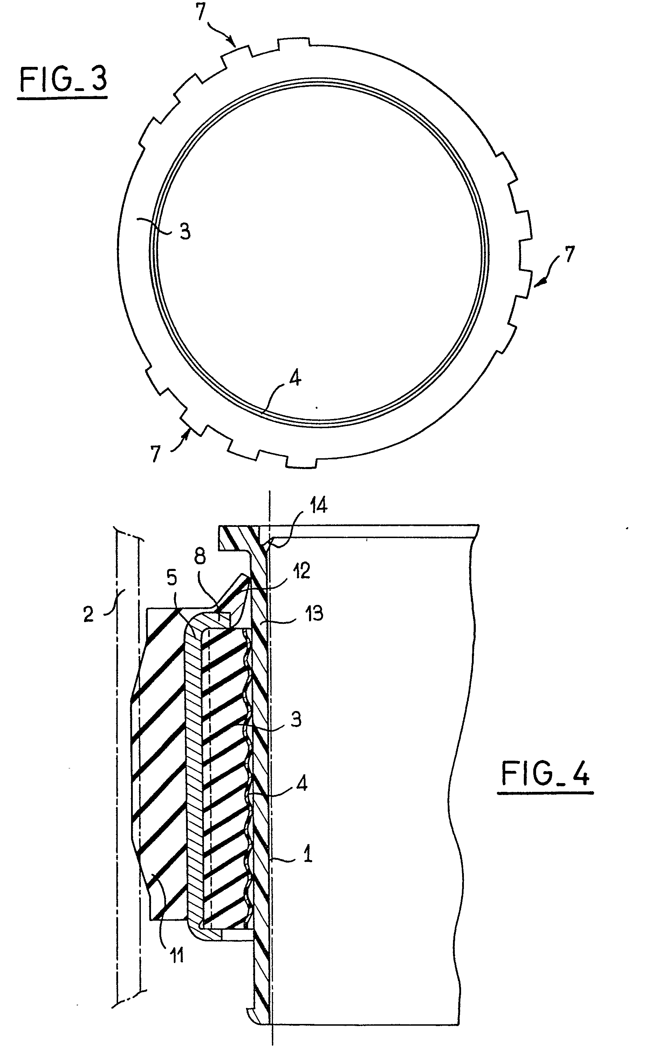

Dans le mode de réalisation de la figure 3, il est prévu pour le coussinet, représenté à l'état libre sur cette figure, trois portées saillantes d'appui de montage externe, angulairement réparties et ici constituées par des crans saillants 7 destinés, sous l'effet de leur contrainte de montage dans le boîtier 5, à conférer une déformation en Δ arrondi au manchon 3, à sa surface intérieure initialement cylindrique, et à la pellicule 4 de friction du coussinet, de sorte que le contact de cette dernière avec l'arbre 1 se trouve assuré suivant des zones axiales limitées de la périphérie de celui-ci, correspondant aux trois portées d'appui de montage du coussinet.

A titre de variante, un même résultat pourrait être obtenu dans le cadre de l'invention, avec un coussinet élastique à surface extérieure également cylindrique trouvant des portées saillantes réparties d'appui de montage formées sur le boîtier et pouvant alors être ménagées sous forme de crans rentrants, angulairement répartis dans le boîtier.

Le boîtier 5 présente une joue latérale 8 qui peut tenir lieu de butée radiale de limitation de débattement extrême de l'arbre 1 sous l'action d'une contrainte latérale, compte tenu de son espacement radial moyen 9 par rapport à l'arbre. Une telle joue 8, ou la joue de sertissage opposée 9, peut aussi tenir lieu de butée axiale éventuelle vis-à-vis d'un épaulement ou organe solidaire de l'arbre 1.

Lorsqu'il est souhaitable qu'un tel palier puisse laisser passage à une circulation de fluide, il peut être prévu, au-delà du passage ici déjà permis entre coussinet 3−4 et arbre 1, des saignées axiales ménagées à la périphérie du manchon 6 telles que celles représentées en 10.

On remarquera qu'un tel palier peut ainsi être directement et économiquement établi entre deux éléments à rotation relative, qui peuvent être venus de fabrication dans des tolérances relativement larges et implantées avec de larges tolérances de positionnement, tout en assurant la fonction attendue avec un relativement faible couple de friction de par la coopération particulière prévue entre arbre et coussinet.

Bien entendu, le nombre des portées précitées peut être prévu supérieur à trois tout en restant dans le cadre de l'invention.

La figure 4 illustre une autre réalisation de palier élastique autolubrifiant, qui est ici adaptée au cas où l'on désire une étanchéité undirectionnelle à l'endroit du palier, avec un arbre interne exempt de rectification appropriée ou présentant une forme telle qu'il ne peut accepter une étanchéité directe par lèvre souple.

On y retrouve un coussinet élastique 3−4 et un boîtier de montage 5 analogues aux précédents, tandis qu'un manchon compressible d'emmanchement 11 de l'ensemble assure cette fois l'étanchéité par sa compression suivant la paroi interne du tube carter 2, et se prolonge du côté de la joue 8 du boîtier 5 par une lèvre souple 12, destinée à coopérer en flexion élastique avec la périphérie d'une bague 13 en matière plastique, telle qu'une résine acétal, intégrée comme élément interne au coussinet et destinée à être rendue solidaire de l'arbre 1 par immobilisation axiale non représentée, et étanche sur lui par l'intermédiaire d'une lèvre interne propre 14.

Il va de soi qu'avec un arbre 1 d'état de surface approprié, on pourrait se dispenser de la bague 13 en assurant l'étanchéité par une lèvre adaptée telle que 12 venue de fabrication avec le manchon 11. La joue 8 peut encore jouer le rôle de butée radiale, ici avec interposition du talon élastique de la lèvre 12.

## Revendications

1. Palier élastique autolubrifiant destiné à être interposé entre deux éléments (1, 2) à rotation relative, comprenant un coussinet en élastomère (3) ayant une surface interne (4) à faible coefficient de friction, destinée à coopérer avec l'élément interne (1) ou un élément (13) solidaire de celui-ci, et une surface externe s'introduisant dans un logement (5) de montage, caractérisé en ce qu'il est prévu, sur ladite surface externe du coussinet (3) ou dans ledit logement (5), au moins trois portées saillantes (7) angulairement réparties et destinées à conférer une déformation à la surface interne de friction du coussinet (3), telle que son contact avec l'élément interne (1, 13) précité se trouve assuré suivant des zones axiales réparties de précharge du coussinet, à effet de centrage et de filtrage des vibrations entre les deux éléments (1, 2) précités.

2. Palier élastique autolubrifiant selon la revendication 1, caractérisé en ce que ledit coussinet (3) est placé dans un boîtier de montage (5, 6) emmanchable dans l'élément externe (2) à rotation relative et constituant ledit logement (5).

3. Palier élastique autolubrifiant selon la revendication 2, caractérisé en ce que ledit boîtier de montage est entouré d'un manchon (6) en élastomère à emmanchement autobloquant par adhérence dans ledit élément externe (2).

4. Palier élastique autolubrifiant selon l'une des revendications 2 et 3, caractérisé en ce que ledit boîtier de montage (5, 6) présente au moins une joue latérale (8) formant butée radiale pour l'élément interne (1) au coussinet.

5. Palier élastique autolubrifiant selon l'une des revendications 2 à 4, caractérisé en ce que ledit boîtier de montage présente une joue latérale (8) destinée à coopérer comme butée axiale avec l'élément interne (1) au coussinet.

6. Palier élastique autolubrifiant selon l'une des revendications 3 à 5, caractérisé en ce que le manchon d'emmanchement en élastomère (6) présente des saignées axiales (10) destinées à permettre un passage de fluide d'un côté à l'autre du palier, au-delà de celui possible entre coussinet (3, 4) et élément interne (1).

7. Palier élastique autolubrifiant selon l'une des revendications 3 à 5, caractérisé en ce que ledit manchon d'emmanchement (5, 6) présente au moins une lèvre d'étanchéité latérale (12) destinée à coopérer avec ledit élément interne au coussinet.

8. Palier élastique autolubrifiant selon l'une des revendications précédentes, caractérisé en ce que ledit coussinet (3, 4) est constitué d'un manchon en élastomère (3) pourvu d'une pellicule interne (4) de résine fluorocarbonée.

## Claims

1. Self-lubricating elastic bearing for being interposed between two elements (1, 2) which are in relative rotation with respect to one another, comprising an elastomer bearing bushing (3) with an inner surface (4) having a low coefficient of friction, which cooperates with the inner element (1) of with an element (13) firmly connected with same respectively, and an outer surface which is inserted into a bearing housing (5) characterized in that at least three protruding bearing faces (7), angularly distributed, are provided on the said outer surface of the bearing bushing (3) or in the said bearing housing (5) respectively in order to deform the inner friction face of the bearing bushing (3), so that its contact with the above mentioned inner element (1, 13) is assured along the axial initial loading areas of the bearing bushing, having the effect of centering and vibration damping between the two above mentioned elements (1, 2).

2. The self-lubricating elastic bearing of Claim 1, characterized in that the said bearing bushing (3) is placed into a bearing shell (5, 6) which can be inserted into the relatively rotating outer element (2) which forms the said bearing housing (5).

3. The self-lubricating elastic bearing of Claim 2, characterized in that the said bearing housing is surrounded by an elastomer bushing (6) which is self-lockingly located in the said outer element due to adherence.

4. The self-lubricating elastic bearing of one of the Claims 2 and 3, characterized in that the said bearing shell (5, 6) is provided with at least one lateral flange (8) which serves as radial stop for the inner element (1) on the bearing bushing.

5. The self-lubricating elastic bearing of one of the Claims 2 through 4, characterized in that the said bearing housing is provided with a lateral flange (8) which cooperates as axial stop with the inner element (1) on the bearing bushing.

6. The self-lubricating elastic bearing of one of the Claims 3 through 5, characterized in that the inserted elastomer bushing (6) is provided with axial notches (10) which allow a greater quantity of fluid to pass from one side of the bearing to the other than it would be possible to pass between the bearing bushing (3, 4) and the inner element (1).

7. The self-lubricating elastic bearing of one of the Claims 3 through 5, characterized in that the said inserted bushing (5, 6) is provided with at least one lateral sealing lip (12) which cooperates with the said inner element on the bearing bushing.

8. The self-lubricating elastic bearing of anyone of the above Claims, characterized in that the said bearing bushing (3, 4) consists of an elastomer bushing (3) which is lined with an inner film of fluorocarbon resin.

**Patentansprüche**

1. Selbstschmierendes elastisches Lager, zum Einsetzen zwischen zwei relativ zueinander drehende Elemente (1, 2), bestehend aus einer Elastomer-Lagerbuchse (3) mit einer Innenfläche (4) mit kleinem Reibbeiwert, die mit dem Innenelement (1) bzw. mit einem mit diesem fest verbundenen Element (13) zusammenwirkt, und mit einer Aussenfläche, die in einem Lagergehäuse (5) angeordnet ist, dadurch gekennzeichnet, dass auf der genannten Aussenfläche der Lagerbuchse (3) bzw. in dem genannten Lagergehäuse (5) wenigstens drei vorspringende Tragflächen (7) winklig verteilt vorgesehen sind um die innere Reibungsfläche der Lagerbuchse (3) zu verformen, so dass ihre Berührung mit dem vorgenannten Innenelement (1, 13) entlang den axialen Vorlastbereichen der Lagerbuchse sichergestellt ist, mit der Wirkung der Zentrierung und Schwingungsdämpfung zwischen den beiden vorgenannten Elementen (1, 2).

2. Selbstschmierendes elastisches Lager gemäss Anspruch 1, dadurch gekennzeichnet, dass die genannte Lagerbuchse (3) in einer Lagerschale (5, 6) liegt, die in das relativ drehende Aussenelement (2) eingezogen werden kann und das genannte Lagergehäuse (5) bildet.

3. Selbstschmierendes elastisches Lager gemäss Anspruch 2, dadurch gekennzeichnet, dass um das genannte Lagergehäuse eine Elastomerbuchse (6) liegt, die durch Eigenhaftung selbsthemmend in dem genannten Aussenelement (2) sitzt.

4. Selbstschmierendes elastisches Lager gemäss einem der Ansprüche 2 und 3, dadurch gekennzeichnet, dass die genannte Lagerschale (5, 6) wenigstens eine Seitenbacke (8) aufweist, die einen Radialanschlag für das Innenelement (1) an der Lagerbuchse bildet.

5. Selbstschmierendes elastisches Lager gemäss einem der Ansprüche 2 bis 4, dadurch gekennzeichnet, dass das genannte Lagergehäuse eine Seitenbacke (8) aufweist, die als Axialanschlag mit dem Innenelement (1) an der Lagerbuchse zusammenwirkt.

6. Selbstschmierendes elastisches Lager gemäss einem der Ansprüche 3 bis 5, dadurch gekennzeichnet, dass die eingesetzte Elastomerbuchse (6) axiale Einschnitte (10) aufweist, die mehr Flüssigkeit von der einen zur anderen Seite des Lagers durchlassen als es zwischen Lagerbuchse (3, 4) und Innenelement (1) möglich ist.

7. Selbstschmierendes elastisches Lager gemäss einem der Ansprüche 3 bis 5, dadurch gekennzeichnet, dass die genannte Einsatzbuchse (5, 6) wenigstens eine seitliche Dichtlippe (12) aufweist, die mit dem genannten Innenelement an der Lagerbuchse zusammenwirkt.

8. Selbstschmierendes elastisches Lager gemäss einem der vorstehenden Ansprüche, dadurch gekennzeichnet, dass die genannte Lagerbuchse (3, 4) aus einer Elastomerbuchse (3) besteht, die mit einem Innenfilm (4) aus einem Fluorkohlenstoffharz überzogen ist.

0 059 230

FIG_1

FIG_2

0 059 230

FIG_3

FIG_4